# EUROPÄISCHE PATENTSCHRIFT

(11) **EP 0 785 363 B1**
(45) Veröffentlichungstag und Bekanntmachung des Hinweises auf die Patenterteilung: **06.03.2002**
(21) Anmeldenummer: 96118402.5
(22) Anmeldetag: 15.11.1996
(51) Int. Cl.: F15B 11/04, G05D 7/06, F04B 49/08

(54) **Förderstromregler**
Current regulator
Régulateur de courant

(30) Priorität: 17.01.1996 DE 19601544
(43) Veröffentlichungstag der Anmeldung: 23.07.1997
(73) Patentinhaber: Eaton Fluid Power GmbH, 76532 Baden-Baden (DE)
(72) Erfinder: Breining, Ulrich, 73092 Hainingen (DE); Lutz, Gerhard, 73104 Börtlingen (DE)
(74) Vertreter: Clarke, Geoffrey Howard

(56) Entgegenhaltungen:
- EP-A- 0 284 987
- EP-A- 0 329 860
- DE-A- 3 110 612
- DE-A- 4 116 649
- DE-U- 9 212 719
- FR-A- 2 493 950
- PATENT ABSTRACTS OF JAPAN vol. 010, no. 375 (M-545), 13. Dezember 1986 & JP 61 167183 A (SEKITAN ROTENBORI KIKAI GIJUTSU KENKYU KUMIAI), 28. Juli 1986

## Beschreibung

Die Erfindung betrifft eine Hydraulikmaschine mit veränderbarem Fördervolumen, welche insbesondere auch über die Nullage hinweg verstellbar und im Vierquadrantenbetrieb betreibbar ist, mit den zu ihrer Regelung notwendigen Förderstromregler, gemäß Oberbegriff des Anspruchs 1.

Derartige Verstellpumpen werden insbesondere im geschlossenen Kreis betrieben, während der Förderstromregler meist mittels eines offenen Steuerdruck-Kreises betrieben wird.

Dabei ist es bekannt, das Stellglied der Hydraulikmaschine, also meist einen beidseitig beaufschlagbaren Stellkolben, mittels eines Servoventiles wahlweise auf der einen oder der anderen Seite so mit dem Steuerdruck zu beaufschlagen, daß das Stellglied die gewünschte Auslenkung der Hydraulikmaschine bewirkt.

Das Servoventil ist dabei in der Regel als Proportionalventil ausgebildet und wird in Abhängigkeit entweder des Steuerdruckes und/oder eines elektrischen Steuersignales gestellt, wobei das elektrische Steuersignal beispielsweise der momentanen Auslenkung der Hydraulikmaschine entsprechen kann. Eine derartige Verstellung der Pumpe über ein Servoventil kann jedoch das Stellglied und damit die Hydraulikmaschine nur mit einer begrenzten Geschwindigkeit verstellen, so daß z. B. bei schnellem Erreichen des Maximaldruckes im Hydraulikkreis der zu regelnden Hydraulikmaschine die Druckbegrenzungsventile öffnen, welche zwischen Hochdruck und Niederdruckseite der Hydraulikmaschine einen Bypass öffnen können. Dies führt zu einer starken, unerwünschten Wärmeentwicklung an diesen Druckbegrenzungsventilen.

Deshalb wird häufig die weg- oder steuerdruckabhängige Regelung mittels des Servoventiles von einer Druck-Förderstromregelung überlagert, die in Abhängigkeit des Systemdruckes p der Hydraulikmaschine arbeitet.

Zu diesem Zweck sind in die Leitungen zwischen dem Servoventil und den beiden Wirkseiten des Stellgliedes Druckregler eingesetzt, die bei fehlendem Systemdruck mittels einer Feder die Verbindung zwischen dem Servoventil und der entsprechenden Seite des Stellgliedes freigeben, bei einem Systemdruck, der höher ist als die Kraft dieser Feder jedoch diese Verbindung schließen und die entsprechende Seite des Stellgliedes mit dem Systemdruck der Hydraulikmaschine beaufschlagt. Diese Druckregler dienen dazu, bei Erreichen des Systemdruckes p das Stellglied der Hydraulikmaschine schnell auf Rücknahme der Auslenkung und eventuell Verstellung in die Gegenrichtung zu beaufschlagen, was in dieser Geschwindigkeit mittels des Servoventiles nicht möglich wäre. Das oberste Ziel ist dabei eine möglichst schnelle Rückstellung des Stellgliedes, um den Druck im Hauptkreis nicht weiter ansteigen zu lassen, und damit auch die Druckbegrenzungsventile dort möglichst nicht auszulösen.

Dabei besteht jedoch das Problem, daß bei der Beaufschlagung der einen Seite des Stellgliedes mittels dem hohen Systemdruck, freigegeben von einem Druckregler, daß im gegenüberliegenden Arbeitsraum des Stellgliedes vorhandene Arbeitsmedium von dort über den anderen Druckregler und das Servoventil zum Tank des Steuerdruckkreislaufes ausgepreßt werden muß. Dies bedeutet, daß dabei in der Regel die Durchlässe des Servoventiles die begrenzende Engstelle sind und somit als Drossel wirken, und dadurch noch am Servoventil der Systemdruck p auftreten kann, mit dem Arbeitsmedium vom Stellglied ausgepreßt wird.

Dies bedeutet, daß das Servoventil einerseits für den hohen Systemdruck ausgelegt sein muß, und andererseits seine Durchlässe sehr groß ausgebildet sein müssen, um möglichst wenig als Drossel zu wirken. Eine derartige Auslegung des Servoventiles bewirkt eine große und teure Bauform, und dennoch verhindert sie ein optimal schnelles Rückstellen des Stellgliedes der Hydraulikmaschine durch die Druck-Förderstromregler.

Es ist daher die Aufgabe gemäß der Erfindung, einen gattungsgemäßen Druckregler für eine verstellbare Hydraulikmaschine so weiterzubilden, daß die Verstellung der Hydraulikmaschine mittels der überlagerten Druckregelung optimal schnell möglich ist und der Förderstromregler klein und kostengünstig hergestellt werden kann.

Diese Aufgabe wird durch die kennzeichnenden Merkmale des Anspruches 1 gelöst. Vorteilhafte Ausführungsformen ergeben sich aus den Unteransprüchen.

Durch die Anordnung von Direktabflußleitungen, die zwischen dem Stellglied und dem Servoventil unter Umgehung des Servoventiles abzweigen, also in der Regel zum Tank des offenen Steuerdruckkreises führen, kann sich weder am Servoventil der hohe Systemdruck durch Aktivierung der Druckregler aufbauen, noch am Stellglied selbst, so daß die Bauteile des Förderstromreglers nur für ein sehr viel niedrigeres Druckniveau, nämlich das Niveau des Steuerdruckes, ausgelegt werden müssen, so daß der Förderstromregler dadurch insgesamt kleiner und kostengünstiger hergestellt werden kann.

Dabei zweigen die Direktabflußleitungen insbesondere zwischen dem Servoventil und den Druckreglern ab, könnten jedoch auch zwischen dem Stellglied und den Druckreglern abzweigen.

Dabei muß in den Direktabflußleitungen über ein Druckbegrenzungsventil, welches auf geringfügig höheren Druck als der Steuerdruck eingestellt ist, ein Abfließen des Steuerdruckes zum Tank anstelle zum Stellglied während der normalen, unterhalb des Systemdruckes liegenden Steuerungsphase vermieden werden.

Wenn dabei für beide Direktabflußleitungen ein gemeinsames Druckbegrenzungsventil verwendet wird, muß durch Rückschlagventile oder andere Elemente der Rückfluß von Arbeitsmedium aus der einen in die andere der Direktabflußleitungen verhindert werden, so daß also nur einseitiges Abfließen in Richtung zum Tank durch die Direktabflußleitungen möglich ist.

Als Direktabflußventil kann dabei auch das in der Steuerdruckleitung ohnehin vorhandene Steuerdruckhalteventil verwendet werden, so daß die mit Rückschlagventilen ausgestatteten Direktabflußleitungen vor diesen Druckhalteventil in der Steuerdruckleitung münden können.

Durch die erfindungsgemäße Lösung wird einerseits eine sehr schnelle Verstellung des Stellgliedes durch die Druckregler möglich, und zwar unabhängig von der Auslegung des Servoventiles. Weiterhin können das Servoventil und auch das Stellglied auf den wesentlich niedrigeren Steuerdruck (40-100 bar) anstelle des höheren Arbeitsdruckes (bis 400 bar) ausgelegt werden.

Eine Ausführungsform gemäß der Erfindung ist im folgenden anhand der Figuren beispielhaft näher beschrieben. Es zeigen:
- Fig. 1:: einen Förderstromregler nach dem Stand der Technik,
- Fig. 2:: einen erfindungsgemäßen Förderstromregler und
- Fig. 3:: eine andere Lösung des erfindungsgemäßen Förderstromreglers.

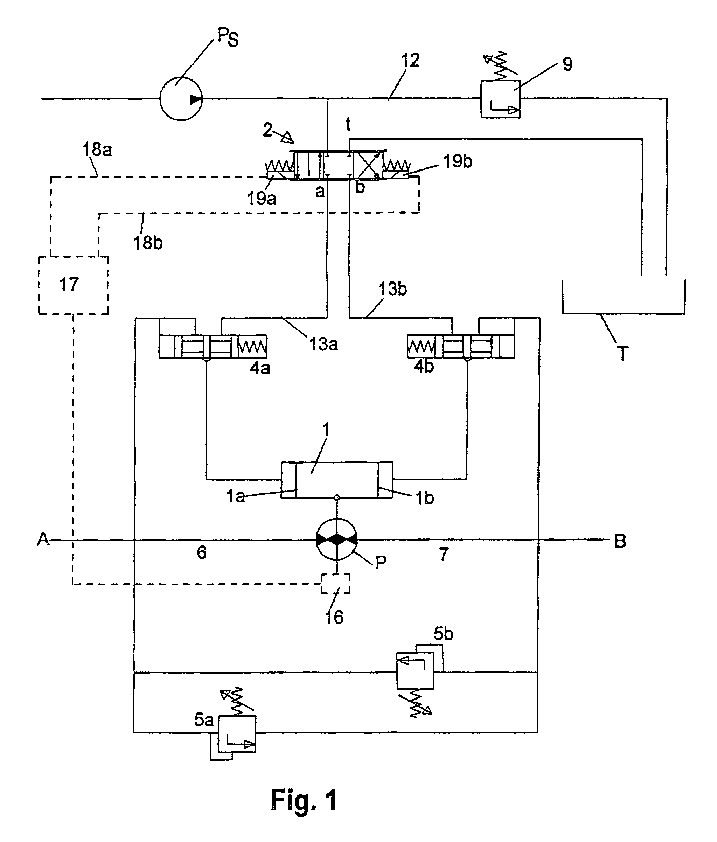

Fig. 1 zeigt einen Förderstromregler nach dem Stand der Technik. Dabei wird eine im Vierquadrantenbetrieb betreibbare Hydraulikmaschine P, beispielsweise eine Axialkolbenpumpe, mittels eines Stellgliedes 1 verstellt, welches mit der Hydraulikmaschine P mechanisch verbunden ist.

Das Stellglied 1 ist dabei üblicherweise ein doppelt wirkender, also von beiden Wirkseiten 1a, 1b her beaufschlagbarer Hydraulikkolben. Das Stellglied 1 ist auf seinen beiden Seiten wahlweise über Servoleitungen 13a, 13b über ein Servoventil 2 mit dem Steuerdruck pₛ aus der Steuerdruckleitung 12 des in der Regel offenen Steuerdruckkreises beaufschlagbar.

Der Steuerdruck pₛ wird gemäß Fig. 1 durch eine separate Steuerdruckpumpe Pₛ erzeugt, und der Steuerdruck wird durch ein vor dem Tank T angeordnetes Steuerdruckhalteventil 9 bestimmt. Anstelle der Steuerdruckpumpe Pₛ könnte der Steuerdruck jedoch auch vom Systemdruck p, wie er in der Regel in jeweils einem der von der Hydraulikmaschine P abzweigenden Stränge 6, 7 bzw. deren Anschlüssen A, B vorliegt, abgezweigt werden.

Das Servoventil 2 ist in der Regel als Proportionalventil ausgebildet, im vorliegenden Fall als Vier/Dreiwegeventil, welches über elektrische Bewegungselemente 19a, 19b, beispielsweise Elektromagnete, und parallel wirkende Federn verstellt bzw. rückgestellt wird.

Diese Elektromagnete 19a, 19b werden dabei über elektrische Steuerleitungen 18a, 18b von einer elektrischen Steuerung 17 aus angesteuert, die als Eingangssignal die momentane Auslenkung der Hydraulikmaschine P von einem am Verstellglied bzw. der Hydraulikmaschine P angeordneten Lagesensor 16, beispielsweise einem Potentiometer, über eine elektrische Steuerleitung mitgeteilt erhält.

Das Servoventil 2 bewirkt somit eine Regelung in Abhängigkeit von einem elektrischen oder mechanischen oder hydraulischen Eingangssignal, basierend auf dem Ist-Schwenkwinkel der Hydraulikmaschine P.

Dieser Förderstromregelung durch das Servoventil 2 ist eine Druckregelung durch die Druckregler 4a, 4b überlagert, welche in den Servoleitungen 13a, 13b vom Servoventil 2 zum Stellglied 1 angeordnet sind.

Diese Druckregler 4a, 4b sind jeweils als Wegeventil ausgestaltet, und auf der einen Seite von einer Feder und auf der anderen Seite vom Druck des Arbeitsmediums einer der Seiten der Hydraulikmaschine P beaufschlagt. Solange der Druck auf die eine Seite des Kolbens des Druckreglers 4a bzw. 4b geringer ist als die Kraft der dagegen gerichteten Feder, hält der Druckregler die Verbindung vom Servoventil 2 zur entsprechenden Wirkseite 1 a, 1b des Stellgliedes 1 offen, so daß eine Weg-Förderstromregelung mittels des Servoventiles 2 stattfindet.

Steigt jedoch bei einem der Druckregler 4a oder 4b der gegen dessen Feder gerichtete Druck p aus dem Ast 6 bzw. 7 des Hauptkreises soweit an, daß die Kraft der Feder erreicht bzw. überschritten wird, so wird die Verbindung zum Servoventil 2 geschlossen und gleichzeitig die entsprechende Wirkseite 1a, 1b des Verstellgliedes 1 mit dem Systemdruck p, der auf einer der Seiten der Hydraulikmaschine P anliegt, beaufschlagt, und zwar in Gegenrichtung zur bisherigen Auslenkung des Stellgliedes 1 durch das Servoventil 2. Es wird also eine Rückverstellung des Stellgliedes 1 durchgeführt, die wegen des schnelleren Ansprechens der dem hohen Systemdruck unterliegenden Druckregler 4 sehr viel schneller vor sich geht als mittels Einregelung durch das Servoventil 2. Zusätzlich sind die Anschlußseiten A und B der Hydraulikmaschine P, also zwischen den Strängen 6 und 7, von denen in der Regel nur jeweils einer unter Hochdruck steht, untereinander über einseitig durchlässige Druckbegrenzungsventile 5a, 5b kurzgeschlossen, deren Druck über dem der Druckregler 4a, 4b eingestellt ist. Der Steuerdruck pₛ in der Steuerleitung 12 liegt nochmals wesentlich niedriger als der Systemdruck p, auf welchen die Druckregler 4 eingestellt sind.

Bei dieser Rückstellung des Stellgliedes 1, die auch über die Nullage hinaus in die umgekehrte Verstellrichtung erfolgen kann, muß bei der Lösung gemäß Fig. 1 nicht nur in den Arbeitsraum auf der einen Wirkseite, z. B. 1a, des Stellgliedes 1 Arbeitsmedium über den Druckregler 4a eingepreßt werden, sondern durch die Verlagerung des Stellkolbens des Stellgliedes 1 muß auch aus dem gegenüberliegenden Arbeitsraum der Wirkfläche 1b das dort vorhandene Arbeitsmedium hinausgepreßt werden, also über den anderen Druckregler 4b und den Anschluß b des Servoventiles 2 zum Tank. Dabei stellen die Durchlässe im Servoventil 2 naturgemäß die engste Stelle und damit die Drosselstelle dar. Dadurch baut sich sowohl am Anschluß b des Servoventiles 2 als auch in den beiden Arbeitsräumen an den Wirkseiten 1a und 1b des Stellgliedes 1 der Druck p auf, der am Druckregler 4a anliegt.

Um die Rückstellung des Stellgliedes 1 bei Aktivierung der Druckregler funktionsgemäß möglichst schnell vollziehen zu können, muß also das Servoventil möglichst große Durchlässe aufweisen, und zusätzlich sowohl das Servoventil als auch das Stellglied 1 für den hohen Arbeitsdruck p ausgelegt sein.

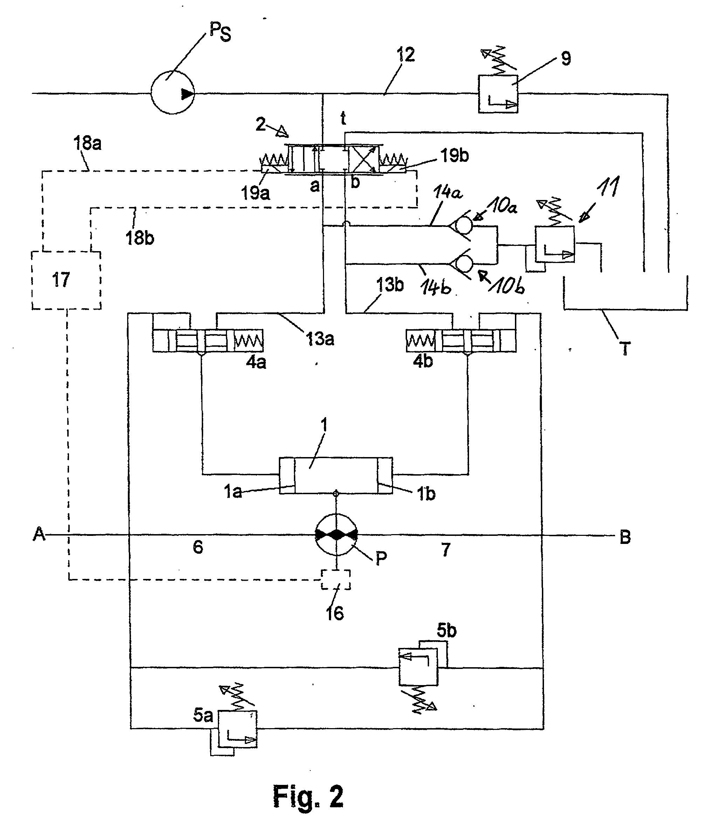

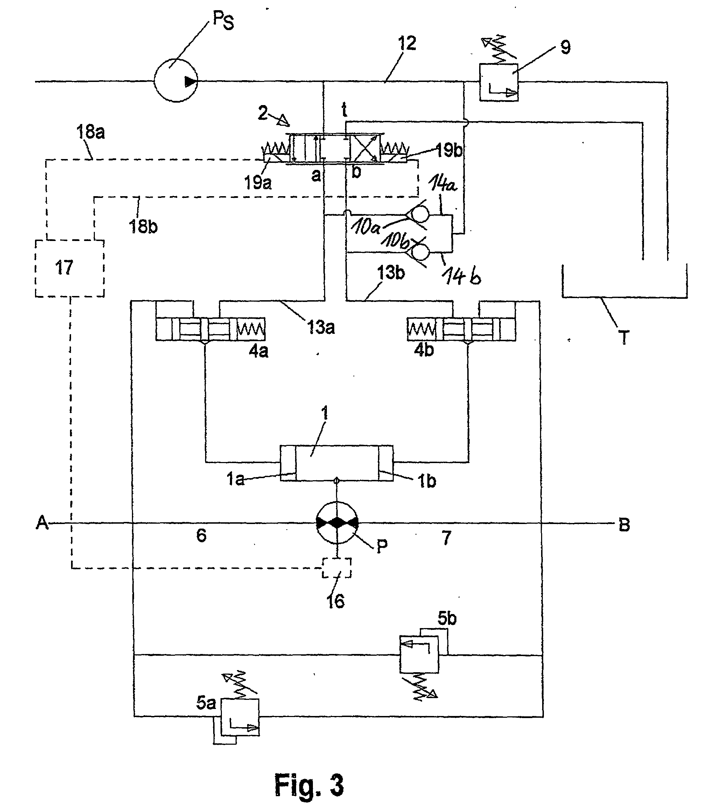

Die erfindungsgemäßen Lösungen der Figuren 2 und 3 zeigen die zusätzlichen Direktabflußleitungen 14a, 14b, die von den Servoleitungen 13a, 13b zwischen dem Servoventil 2 und den Druckreglern 4a bzw. 4b abzweigen und in den Tank münden. Das aus einem der Arbeitsräume des Stellgliedes 1 abfließende Arbeitsmedium muß damit nicht mehr das Servoventil 2 durchlaufen, wodurch das Servoventil 2 zum einen nicht mehr für den hohen Arbeitsdruck p ausgelegt sein muß, und zum anderen auch relativ klein und mit kleinen Durchlaßöffnungen ausgestaltet werden kann.

Um während der Regelung der Hydraulikmaschine p durch das Servoventil 2 dessen Regelfunktion nicht zu beeinträchtigen, wird in den Direktabflußleitungen 14a, 14b über ein Druckbegrenzungsventil 11 (Fig. 2) der Druck auf einem Niveau etwas über dem Steuerdruck pₛ gehalten, welcher im Servoventil 2 und in den Servoleitungen 13a, 13b anliegt. Um ein einziges Druckbegrenzungsventil 11 für beide Direktabflußleitungen 14a, 14b benutzen zu können, sind diese parallel geschaltet und mit Rückschlagventilen 10a, 10b ausgestattet, die Durchfluß nur in Richtung des Tanks, nicht jedoch zurück in die Servoleitungen 13a, 13b zulassen.

In Fig. 3 ist direkt das Steuerdruckhalteventil 9 der Steuerdruckleitung 12 als Druckhalteventil für die Direktabflußleitungen 14a, 14b benutzt, indem die Direktabflußleitungen 14a, 14b, wiederum ausgestattet mit Rückschlagventilen 10a, 10b stromaufwärts des Steuerdruckhalteventiles 9 in der Steuerdruckleitung 12 münden. Dadurch wird in den Direktabflußleitungen 14a, 14b kein höherer, sondern genau der gleiche Druck wie in der Steuerleitung 12 und den Servoleitungen 13a, 13b gehalten, was das niedrigste mögliche Druckniveau der Direktabflußleitungen 14a, 14b darstellt, und somit die Variante mit dem geringsten Gegendruck beim Auspressen von Arbeitsmedium aus einem der Arbeitsräume des Stellgliedes 1 bei Aktivierung eines der Druckregler.

In den Figuren 1 bis 3 sind ferner die Arbeitsstellungen der einzelnen Regelelemente zu erkennen:

In der Darstellung der Figur 1, also der Lösung des Standes der Technik, sind alle Elemente in der Mittellage dargestellt.

In der Praxis jedoch wird - anschließend an einen Betrieb der Hydraulikmaschine P ohne Auslenkung und damit mit Umgebungsdruck an beiden Anschlüssen A und B - zunächst über ein Steuersignal von der Steuerung 17 aus gemäß Fig. 3 das Servoventil 2 nach rechts verschoben, so daß der Druckregler mit der Steuerdruckleitung 12 und der Druckregler 4b mit dem Tank T verbunden ist.

Da an den Anschlüssen A und B der Hydraulikmaschine P kein erhöhter Druck anliegt, pressen bei den Druckreglern die Federn den jeweiligen Schieber beim Druckregler 4a nach links und beim Druckregler 4b nach rechts, so daß beide Druckregler 4a, 4b die Verbindung vom Servoventil 2 zu den jeweiligen Wirkflächen 1a, 1b des Stellgliedes 1 freigeben. Dadurch wird das Stellglied 1 nach rechts bis zum Anschlag verschoben, mit der Folge, daß sich im Ast 7, also am Anschluß B der Hydraulikmaschine P ein zunehmender Arbeitsdruck p aufbaut. Sobald dieser Arbeitsdruck p, der auch auf der rechten Stirnseite des Schiebers des Druckreglers 4b anliegt, die Kraft der Feder in diesem Druckregler überwinden kann, wird dadurch zunächst die Verbindung der Servoleitung 13b zum Stellglied 1 unterbrochen und nachfolgend die Wirkfläche 1b des Stellgliedes 1 mit dem Anschluß B der Hydraulikmaschine verbunden, also mit dem Arbeitsdruck p beaufschlagt.

Dadurch wird das Steuerglied 1 sehr schnell nach links verschoben, so daß das im Arbeitsraum der linken Wirkfläche 1a des Stellgliedes 1 befindliche Arbeitsmedium herausgepreßt werden muß.

Der Druckregler 4a ist auf seiner linken Stirnfläche nur mit der Niederdruckseite A der Hydraulikmaschine verbunden, und kann dadurch die Kraft der Feder dieses Druckreglers 4a nicht überwinden. Beim Druckregler 4a ist somit nach wie vor die Verbindung zum Servoventil 2, also zur Servoleitung 13a hin offen geschaltet, so daß das aus dem linken Arbeitsraum des Stellgliedes auszupressende Arbeitsmedium problemlos in die Servolenkung 13a und von dort über die Direktabflußleitung 14 in den Tank gelangen kann, ohne enge Drosselstellen überwinden zu müssen.

Die Erfassung der Ist-Auslenkung der Hydraulikmaschine P bzw. des Stellgliedes 1 durch einen Lagesensor 16, die Weiterleitung an eine Steuerung 17, in welcher auch die Soll-Lage von außen vorzugeben ist, und das hiervon abzugebende Signal an die Bewegungselemente 19 erfolgt im vorliegenden Fall zwar elektrisch, kann wahlweise jedoch auch auf mechanische und/oder hydraulische Art vollzogen werden.

Zusätzlich empfiehlt es sich, bei den Druckreglers 4a, 4b den mittleren Ring mit großem Durchmesser in seiner axialen Länge geringer auszubilden als der Querschnitt der Bohrung bzw. Leitung zum Stellglied 1, so daß eine Unterdeckung gegeben ist und die Leitung zum Stellglied 1 durch diese mittlere Schulter des Druckreglers 4a bzw. 4b niemals verschlossen werden kann. Dadurch ist sichergestellt, daß immer Verbindung entweder zum Servoventil oder zur entsprechenden Seite der Hydraulikmaschine gegeben ist.

### BEZUGSZEICHENLISTE

- 1a, 1b: Wirkseite
- 1: Stellglied
- 2: Servoventil (=Wegförderstromregler)
- 4: Druckregler
- 5: Druckbegrenzungsventil
- 6: Strang
- 7: Strang
- 9: Steuerdruckhalteventil
- 10: Rückschlagventil
- 11: Druckbegrenzungsventil
- 12: Steuerdruckleitung
- 13: Servoleitungen
- 14: Direktabflußleitungen
- 15: Bypassleitung
- 16: Lagesensor
- 17: Steuerung
- 18: Steuerleitungen
- 19: elektrische Bewegungselemente
- P: Hydraulikmaschine
- Pₛ: Steuerdruckpumpe
- T: Tank
- A, B: Anschlüsse
- p: Arbeitsdruck, Systemdruck
- pₛ: Steuerdruck

## Patentansprüche

1. Förderstromregler mit Hydraulikmaschine (P) mit veränderbarem Fördervolumen, wobei
- die Wirkseiten (1a, 1b) des zweiseitigen Stellgliedes (1) der Hydraulikmaschine (P) über Servoleitungen (13a, 13b) und ein Servoventil (2) wahlweise mit der Steuerdruckleitung (12) bzw. dem Tank (T) verbindbar sind, und
- in den Servoleitungen (13a, 13b) jeweils ein Druckregler (4a, 4b) angeordnet ist, welcher die Verbindung der zugeordneten Wirkseite (1a, 1b) mit dem zugeordneten Anschluß (A, B) der Hydraulikmaschine (P) statt mit dem Servoventil (2) oder dem Verschluß der jeweiligen Steuerleitung (13) ermöglicht,
**dadurch gekennzeichnet, daß**
von den Servoleitungen (13a, 13b) Direktabflußleitungen (14a, 14b) über wenigstens ein Druckbegrenzungsventil (9, 11) zum Tank (T) abzweigen.

2. Förderstromregler nach Anspruch 1,
**dadurch gekennzeichnet, daß**
die Direktabflußleitungen (14) in den Servoleitungen (13) zwischen dem Druckregler (4a, 4b) und dem Servoventil (2) angeordnet sind.

3. Förderstromregler nach Anspruch 1 oder 2,
**dadurch gekennzeichnet, daß**
ein gemeinsames Druckbegrenzungsventil (11) für die beiden Direktabflußleitungen (14a, 14b) vorhanden ist und Rückschlagventile (10a, 10b) in den Direktabflußleitungen (14a, 14b) angeordnet sind.

4. Förderstromregler nach Anspruch 3,
**dadurch gekennzeichnet, daß**
als Druckbegrenzungsventil (11) für die Direktabflußleitungen (14a, 14b) das Steuerdruckhalteventil (9) in der Steuerdruckleitung (12) verwendet wird.

5. Förderstromregler nach einem der vorhergehenden Ansprüche,
**dadurch gekennzeichnet, daß**
die Hydraulikmaschine (P) eine Vierquadrantenmaschine ist.

6. Förderstromregler nach einem der vorhergehenden Ansprüche,
**dadurch gekennzeichnet, daß**
die Hydraulikmaschine (P) im geschlossenen Kreis betrieben wird.

7. Förderstromregler nach einem der vorhergehenden Ansprüche,
**dadurch gekennzeichnet, daß**
der Steuerdruck in der Steuerdruckleitung (12) von einer Steuerpumpe (Ps) erzeugt wird.

8. Förderstromregler nach Anspruch 1 bis 6,
**dadurch gekennzeichnet, daß**
der Steuerdruck (ps) in der Steuerdruckleitung (12) ein aus dem Arbeitsdruck (p) abgezweigter Druck ist.

9. Förderstromregler nach einem der vorhergehenden Ansprüche,
**dadurch gekennzeichnet, daß**
die Druckregler (4a, 4b) in Richtung der Freigabe zwischen dem Stellglied (1) und dem Servoventil (2) mittels einer Feder und in Gegenrichtung mit dem Druck des zugeordneten Anschlusses (A, B) der Hydraulikmaschine (P) beaufschlagbar ist.

10. Förderstromregler nach einem der vorhergehenden Ansprüche,
**dadurch gekennzeichnet, daß**
die Druckregler (4a, 4b) keine Stellung einnehmen können, in welcher die Verbindung der zugeordneten Wirkseite (1a, 1b) des Stellgliedes (1) vollständig durch den Druckregler (4a, 4b) gesperrt ist.

11. Förderstromregler nach einem der vorhergehenden Ansprüche,
**dadurch gekennzeichnet, daß**
die beiden Anschlüsse (A, B) der Hydraulikmaschine (M) über separate Bypassleitungen (15a, 15b) mit darin angeordneten, einseitig durchströmbaren Druckbegrenzungsventilen (5a, 5b) mit dem jeweils anderen Anschluß verbunden sind.

12. Förderstromregler nach einem der vorhergehenden Ansprüche,
**dadurch gekennzeichnet, daß**
am Stellglied (1) bzw. der Hydraulikmaschine (P) ein Lagesensor (16) zur Registrierung der Fördervolumeneinstellung der Pumpe (P) angeordnet ist, dessen Signale von einer Steuerung (17) verarbeitet und zur Ansteuerung des bzw. der Bewegungselemente (19a, 19b) am Servoventil (2) benutzt werden.

13. Förderstromregler nach Anspruch 12,
**dadurch gekennzeichnet, daß**
der Lagesensor (16), die Steuerung (17) und die Bewegungselemente (19) elektrisch funktionieren.

## Claims

1. A Flow controller having a hydraulic machine (P) having a variable displacement, wherein
- the effective sides (1a, 1b) of the two sided adjustment member (1) of the hydraulic machine (P) is connectable via servo conduits (13a, 13b) and a servo valve (2) selectively to the control pressure conduit (12) and the tank (T), respectively, and wherein
- a pressure controller (4a, 4b) is arranged in the servo conduits (13a, 13b) which enables the connection of the associated effective side (1a, 1b) with the associated port (A, B) of the hydraulic machine (P) instead of with the servo valve (2) or the closure of the respective control conduit (13),
**characterized in that**
direct drainage conduits (14a, 14b) are branched off of the servo conduits (13a, 13b) via at least one pressure relief valve (9, 11) leading to said tank (T).

2. Flow controller according to claim 1 **characterized in that** the direct drainage conduits (14) in said servo conduits (13) are arranged between the pressure controller (4a, 4b) and the servo valve (2).

3. Flow controller according to claim 1 or 2 **characterized in that** a common pressure relief valve (11) is provided for both direct drainage conduits (14a, 14b) and check valves (10a, 10b) are arranged in said direct drainage conduits (14a, 14b).

4. Flow controller according to claim 3, **characterized in that** a control pressure maintenance valve (9) in said control pressure conduit (12) is used as said pressure relief valve (11) for the direct drainage conduits (14a, 14b).

5. Flow controller according to one of the preceding claims, **characterized in that** the hydraulic machine (P) is a four quadrant machine.

6. Flow controller according to one of the preceding claims, **characterized in that** the hydraulic machine (P) is operated in a closed loop.

7. Flow controller according to one of the preceding claims, **characterized in that** the control pressure in the control pressure conduit (12) is generated by a control pump (Ps).

8. Flow controller according to one of the claims 1 to 6, **characterized in that** the control pressure (ps) in the control pressure conduit (12) is a pressure which is branched off of the operating pressure (p).

9. Flow controller according to one of the preceding claims, **characterized in that** a spring is provided to urge the pressure controllers (4a, 4b) in release direction between the adjustment member (1) and the servo valve (2) and that the pressure of the associated ports (A, B) of the hydraulic machine (P) may be applied to said pressure controllers in the opposite direction.

10. Flow controller according to one of the preceding claims, **characterized in that** the pressure controllers (4a, 4b) are not capable of moving to a position in which the connection of the associated effective side (1a, 1b) of the regulating member (1) is completely blocked by the pressure controller (4a, 4b).

11. Flow controller according to one of the preceding claims, **characterized in that** both ports (A, B) of the hydraulic machine (M) are connected via separate bypass-conduits (15a, 15b) to the respective other port, said bypass-conduits having therein pressure relief valves (5a, 5b) of the type allowing flow in one direction only.

12. Flow controller according to one of the preceding claims, **characterized in that** a position sensor (16) is provided at the adjustment member (1) and the hydraulic machine (P), respectively, for registration or sensing of the displacement setting of the pump (P), the signals of said sensor being processed by a controller (17) and are used for operating or controlling the actuating element(s) (19a, 19b) at the servo valve (2).

13. Flow controller according to claim 12 characterizing that the position sensor (16), the controller (17) and the actuating elements (19) operate electrically.

## Revendications

1. Régulateur de débit et machine hydraulique (P) avec débit volumique variable, où
- les faces travaillantes (1a, 1b) de l'actionneur (1) de la machine hydraulique (P) peuvent être reliées par des circuits d'asservissement (13a, 13b) et une vanne d'asservissement (2), au choix, soit avec le circuit de pression de commande (12), soit avec le réservoir (T), et où
- dans chacun des circuits d'asservissement (13a, 13b) est disposé un régulateur de pression (4a, 4b), qui permet d'établir la liaison entre la face travaillante (1a, 1b) et le raccord (A, B) correspondant de la machine hydraulique (P) au lieu de la llaison avec la vanne d'asservissement (2) ou la fermeture des circuits de commande (13) respectifs,
**caractérisé en ce que**
des conduites d'évacuation directes (14a, 14b) partent des circuits d'asservissement (13a, 13b) vers le réservoir (T) en passant par au moins une vanne de limitation de pression (9, 11).

2. Régulateur de débit suivant la revendication 1,
**caractérisé en ce que**
les conduites d'évacuation directe (14) sont disposées dans les circuits d'asservissement (13) entre le régulateur de pression (4a, 4b) et la vanne d'asservissement (2).

3. Régulateur de débit suivant la revendication 1 ou 2,
**caractérisé en ce qu'**il
existe une vanne de limitation de pression (11) commune aux deux conduites d'évacuation directe (14a, 14b) et que des vannes antiretour (10a, 10b) sont installées dans les conduites d'évacuation directe (14a, 14b).

4. Régulateur de débit suivant la revendication 3,
**caractérisé en ce que**
la vanne de maintien de pression de commande (9) dans le circuit de pression de commande (12) est utilisée à titre de vanne de limitation de pression (11) dans les conduites d'évacuation directe (14a, 14b).

5. Régulateur de débit suivant une des revendications précédentes,
**caractérisé en ce que**
la machine hydraulique (P) est une machine à quatre quadrants.

6. Régulateur de débit suivant une des revendications précédentes,
**caractérisé en ce que**
la machine hydraulique (P) fonctionne en circuit fermé.

7. Régulateur de débit suivant une des revendications précédentes,
**caractérisé en ce que**
la pression de commande dans le circuit de pression de commande (12) est générée par une pompe de commande (Ps).

8. Régulateur de débit suivant une des revendications 1 à 6,
**caractérisé en ce que**
la pression de commande (ps) dans le circuit de pression de commande (12) est une pression dérivée de la pression de travail (p).

9. Régulateur de débit suivant une des revendications précédentes,
**caractérisé en ce que**
les régulateurs de pression (4a, 4b) peuvent être actionnés par un ressort dans le sens de l'ouverture entre l'actionneur (1) et la vanne d'asservissement (2) et dans l'autre sens par l'application de la pression du raccord (A, B) correspondant de la machine hydraulique (P).

10. Régulateur de débit suivant une des revendications précédentes,
**caractérisé en ce que**
les régulateurs de pression (4a, 4b) ne peuvent pas se trouver dans une position dans laquelle le circuit de la face travaillante (1a, 1b) de l'actionneur (1) est complètement fermé par le régulateur de pression (4a, 4b).

11. Régulateur de débit suivant une des revendications précédentes,
**caractérisé en ce que**
chacun des deux raccords (A, B) de la machine hydraulique (M) est relié à l'autre raccord par des circuits de by-pass (15a, 15b) dans lesquels sont disposés des vannes de limitation de pression (5a, 5b) à passage unidirectionnel.

12. Régulateur de débit suivant une des revendications précédentes,
**caractérisé en ce qu'**un
détecteur de position (16) est disposé sur l'actionneur (1) ou sur la machine hydraulique (P), afin d'enregistrer le réglage du débit volumique de la pompe (P), dont les signaux sont traités par un système de commande (17) et utilisés pour commander le ou les vérins (19a, 19b) situé(s) sur la vanne d'asservissement (2).

13. Régulateur de débit suivant la revendication 12,
**caractérisé en ce que**
le détecteur de position (16), le système de commande (17) et les vérins (19) fonctionnent électriquement.
